(19) Europäisches Patentamt
European Patent Office
Office européen des brevets

(11) EP 4 778 946 A1

(12) **EUROPEAN PATENT APPLICATION**
published in accordance with Art. 153(4) EPC

(43) Date of publication:
**22.07.2026 Bulletin 2026/30**

(21) Application number: **24872605.1**

(22) Date of filing: **30.09.2024**

(51) International Patent Classification (IPC):
***C08F 2/42*** *(2006.01)* ***C08F 14/26*** *(2006.01)*
***C08F 16/24*** *(2006.01)*

(52) Cooperative Patent Classification (CPC):
**C08F 2/42; C08F 14/26; C08F 16/24**

(86) International application number:
**PCT/JP2024/035014**

(87) International publication number:
**WO 2025/070826 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023 JP 2023170600**

(71) Applicant: **Daikin Industries, Ltd.**
**Osaka-shi, Osaka 530-0001 (JP)**

(72) Inventors:
- **TANAKA, Takayuki**
  **Osaka-Shi, Osaka 530-0001 (JP)**
- **SATO, Hiroyuki**
  **Osaka-Shi, Osaka 530-0001 (JP)**
- **TSUNODA, Yuko**
  **Osaka-Shi, Osaka 530-0001 (JP)**
- **MIYAMOTO, Masayoshi**
  **Osaka-Shi, Osaka 530-0001 (JP)**
- **KATO, Taketo**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **METHOD FOR PRODUCING POLYTETRAFLUOROETHYLENE**

(57) The present disclosure provides a method for producing non melt-processible polytetrafluoroethylene, the method comprising suspension-polymerizing tetrafluoroethylene in the presence of a polymerization initiator and an aqueous medium in a reactor to prepare a composition containing the aqueous medium and the non melt-processible polytetrafluoroethylene, wherein after a polymerization terminator is fed to the reactor, or after the tetrafluoroethylene remaining in the reactor is removed from the reactor, a polymerization inhibitor for inhibiting polymerization of residual radicals is fed to the reactor.

EP 4 778 946 A1

## Description

TECHNICAL FIELD

The present disclosure relates to a method for producing polytetrafluoroethylene.

BACKGROUND ART

Patent Document 1 discloses a method for producing polytetrafluoroethylene, the method comprising bringing tetrafluoroethylene into contact with an aqueous medium containing a water-soluble polymerization initiator to carry out a polymerization reaction, recovering unreacted tetrafluoroethylene after the polymerization reaction, and washing the contents with an inert gas.

RELATED ART

PATENT DOCUMENT

Patent Document 1: Japanese Patent Publication No. S48-034399

SUMMARY OF THE INVENTION

PROBLEM TO BE SOLVED BY THE INVENTION

An object of the present disclosure is to provide a method for producing non melt-processible polytetrafluoroethylene, wherein a polytetrafluoroethylene composition obtained by polymerization is treated by a novel method.

MEANS FOR SOLVING THE PROBLEM

The present disclosure provides a method for producing a non melt-processible polytetrafluoroethylene, the method comprising suspension-polymerizing tetrafluoroethylene in the presence of a polymerization initiator and an aqueous medium in a reactor to prepare a composition containing the aqueous medium and the non melt-processible polytetrafluoroethylene, wherein after a polymerization terminator is fed to the reactor, or after the tetrafluoroethylene remaining in the reactor is removed from the reactor, a polymerization inhibitor for inhibiting polymerization of a residual radical is fed to the reactor.

EFFECTS OF INVENTION

The present disclosure can provide a method for producing non melt-processible polytetrafluoroethylene, wherein a polytetrafluoroethylene composition obtained by polymerization is treated by a novel method.

DESCRIPTION OF EMBODIMENTS

Before describing the present disclosure in detail, some terms used in the present disclosure will now be defined or described.

The term "melt-fabricable" as used herein means that a polymer has an ability to be processed in a molten state using a conventional processing device such as an extruder or an injection molding machine. Accordingly, a melt-fabricable fluororesin usually has a melt flow rate of 0.01 to 500 g/10 min as measured by the measurement method described below.

Polytetrafluoroethylene (PTFE) as used herein is preferably a fluoropolymer having a tetrafluoroethylene unit content of 99 mol% or more based on all polymerization units.

Herein, the content of each monomer constituting the fluoropolymer can be calculated by any suitable combination of NMR, FT-IR, elemental analysis, and X-ray fluorescence analysis according to the type of monomer.

The "organic group" as used herein means a group containing one or more carbon atoms or a group formed by removing one hydrogen atom from an organic compound. The organic group is preferably an alkyl group optionally having one or more substituents.

A range indicated by endpoints as used herein includes all numerical values within the range (for example, the range of 1 to 10 includes 1.4, 1.9, 2.33, 5.75, 9.98, and the like).

The phrase "at least one" as used herein includes all numerical values equal to or greater than 1 (for example, at

least 2, at least 4, at least 6, at least 8, at least 10, at least 25, at least 50, at least 100, and the like).

Hereinafter, specific embodiments of the present disclosure will now be described in detail, but the present disclosure is not limited to the following embodiments.

A composition obtained by suspension-polymerizing tetrafluoroethylene may contain, other than non melt-processible polytetrafluoroethylene, a fluorine-containing compound having a hydrophilic group.

In the production method of the present disclosure, tetrafluoroethylene is suspension-polymerized in a reactor to produce non melt-processible polytetrafluoroethylene, then a polymerization terminator is fed to the reactor or tetrafluoroethylene remaining in the reactor is removed from the reactor, and a polymerization inhibitor for inhibiting polymerization of remaining radicals is fed to the reactor. The use of the production method of the present disclosure makes it possible to produce polytetrafluoroethylene in which the content of a fluorine-containing compound having a hydrophilic group is small.

That is to say, the present disclosure relates to a method for producing non melt-processible polytetrafluoroethylene, the method comprising suspension-polymerizing tetrafluoroethylene in the presence of a polymerization initiator and an aqueous medium in a reactor to prepare a composition containing the aqueous medium and the non melt-processible polytetrafluoroethylene, wherein after a polymerization terminator is fed to the reactor, or after the tetrafluoroethylene remaining in the reactor is removed from the reactor, a polymerization inhibitor for inhibiting polymerization of residual radicals is fed to the reactor.

Below, the steps and the materials used in the steps will now be described in detail.

(Polymerization of tetrafluoroethylene)

In the production method of the present disclosure, non melt-processible polytetrafluoroethylene is prepared by suspension-polymerizing tetrafluoroethylene (TFE) in the presence of a polymerization initiator and an aqueous medium in a reactor.

By suspension-polymerizing TFE, particles of suspension-polymerized polytetrafluoroethylene are obtained. Suspension-polymerized particles cannot exist in a dispersed state in an aqueous medium. In contrast, when polytetrafluoroethylene is produced by emulsion-polymerizing TFE, the resulting polytetrafluoroethylene is obtained in the form of primary particles (emulsion-polymerized particles) dispersed in an aqueous medium.

Suspension-polymerized particles usually have a greater average particle size than emulsion-polymerized particles. The average particle size of suspension-polymerized particles is preferably 200 μm or more, more preferably 400 μm or more, even more preferably 800 μm or more, and particularly preferably 1 mm or more, and is preferably 100 mm or less.

In the production method of the present disclosure, polytetrafluoroethylene obtained by suspension polymerization is non melt-processible, high molecular weight polytetrafluoroethylene. The term "non melt-processible" refers to a property that the melt flow rate cannot be measured at a temperature higher than the crystal melting point in accordance with ASTM D 1238 and D 2116.

Polytetrafluoroethylene preferably has a standard specific gravity (SSG) of 2.130 to 2.280. Specific gravity can be measured in accordance with ASTM D4894. Herein, when the standard specific gravity (SSG) of polytetrafluoroethylene is within the above range, it means that polytetrafluoroethylene is high molecular weight polytetrafluoroethylene.

Polytetrafluoroethylene preferably has a peak temperature of 333 to 347°C, and more preferably 335 to 347°C. The peak temperature can be specified as a temperature corresponding to the maximum value appearing in a differential thermal analysis (DTA) curve obtained by raising the temperature of polytetrafluoroethylene, which has no history of being heated to a temperature of 300°C or higher, under a condition of 10°C/min using TG-DTA (a thermogravimetric - differential thermal analyzer). Herein, when the peak temperature of polytetrafluoroethylene is within the above range, it means that polytetrafluoroethylene is high molecular weight polytetrafluoroethylene.

Preferably, polytetrafluoroethylene has at least one endothermic peak in a range of 333 to 347°C on a heat-of-fusion curve with a temperature-increasing rate of 10°C/min using a differential scanning calorimeter (DSC) for polytetrafluoroethylene which has not been heated up to 300°C or higher, and has an enthalpy of fusion of 52 mJ/mg or higher at 290 to 350°C calculated from the heat-of-fusion curve. Polytetrafluoroethylene has an enthalpy of fusion of more preferably 55 mJ/mg or higher, and even more preferably 58 mJ/mg or higher.

Suspension polymerization can be carried out by charging a reactor with a monomer such as TFE, an aqueous medium, and optionally other additives, stirring the contents of the reactor, maintaining the reactor at a predetermined polymerization temperature, and adding a predetermined amount of a polymerization initiator to thereby initiate the polymerization reaction. After the initiation of the polymerization reaction, components such as a monomer such as TFE, a polymerization initiator, and a chain transfer agent may additionally be added depending on the purpose.

(Polymerization initiator)

Suspension polymerization can be carried out in the presence of a polymerization initiator. The polymerization initiator is not limited as long as it can generate radicals within the polymerization temperature range, and known oil-soluble and/or water-soluble polymerization initiators can be used. Moreover, the polymerization initiator can also be combined with a reducing agent or the like to form a redox agent and initiate polymerization. The concentration of the polymerization initiator is suitably determined according to the type of monomer, the molecular weight of the target polytetrafluoroethylene, and the reaction rate.

The polymerization initiator may be an oil-soluble radical polymerization initiator or a water-soluble radical polymerization initiator.

The oil-soluble radical polymerization initiator may be a known oil-soluble peroxide, and representative examples include a dialkyl peroxycarbonate such as diisopropyl peroxydicarbonate and di-sec-butyl peroxydicarbonate; a peroxy ester such as t-butyl peroxyisobutyrate and t-butyl peroxypivalate; and a dialkyl peroxide such as di-t-butyl peroxide, as well as a di[perfluoro (or fluorochloro) acyl]peroxide such as di(ω-hydro-dodecafluoroheptanoyl)peroxide, di(ω-hydro-tetradecafluorooctanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl) peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples include ammonium salts, potassium salts, and sodium salts of persulphuric acid, perboric acid, perchloric acid, perphosphoric acid, and percarbonic acid, organic peroxides of disuccinic acid peroxide and diglutaric acid peroxide, t-butyl permaleate, and t-butyl hydroperoxide. A reducing agent such as a sulfite may be contained together, and the amount thereof may be 0.1 to 20 times the amount of the peroxide.

For example, when carrying out the polymerization at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of the persulfates include ammonium persulfate and potassium persulfate. Examples of the sulfites include sodium sulfite and ammonium sulfite. In order to increase the decomposition rate of the initiator, the combination of the redox initiator preferably contains a copper salt or an iron salt. The copper salt may be copper(II) sulfate, and the iron salt may be iron(II) sulfate.

Examples of the redox initiator include potassium permanganate/oxalic acid, potassium permanganate/ammonium oxalate, ammonium persulfate/bisulfite/iron sulfate, manganese triacetate/oxalic acid, cerium ammonium nitrate/oxalic acid, and bromate/bisulfite, and potassium permanganate/oxalic acid is preferable. When using a redox initiator, one of an oxidizing agent and a reducing agent may be introduced into a polymerization tank in advance, and then the other may be added continuously or intermittently to start the polymerization. For example, when using potassium permanganate/oxalic acid, preferably, a polymerization tank is charged with oxalic acid, and potassium permanganate is continuously added thereto.

The polymerization initiator may be added in any amount, and the initiator in an amount that does not significantly decrease the polymerization rate (e.g., concentration of several ppm in water) or more may be added at once in the initial stage of polymerization, or may be added successively or continuously. The upper limit is within a range where the reaction temperature is allowed to increase while the polymerization reaction heat is removed through the device surface, and the upper limit is more preferably within a range where the polymerization reaction heat can be removed through the device surface.

By adding a decomposer when polymerizing TFE, the concentration of radicals during polymerization can be regulated. Examples of the decomposer include sulfite, bisulfite, bromate, diimine, oxalic acid, copper salts, and iron salts. Examples of the sulfite include sodium sulfite and ammonium sulfite. The copper salt may be copper(II) sulfate, and the iron salt may be iron(II) sulfate. The amount of the decomposer added is in the range of 25 to 300% by mass based on the amount of the oxidizing agent combined as a polymerization initiator (a redox initiator). The amount of the decomposer added is preferably 25 to 150% by mass, and more preferably 50 to 100% by mass. Further, the decomposer is preferably added after 5% by mass of all TFE consumed in the polymerization reaction is polymerized, and more preferably after 10% by mass is polymerized. The amount of the decomposer added is preferably an amount corresponding to 0.1 to 20 mass ppm and more preferably an amount corresponding to 3 to 10 mass ppm of the mass of the aqueous medium used.

(Aqueous medium)

Suspension polymerization is carried out by polymerizing TFE in an aqueous medium under stirring. The aqueous medium is a reaction medium in which polymerization is carried out, and means a liquid containing water. The aqueous medium is not limited as long as it contains water, and may be an aqueous medium containing water and, for example, a fluorine-free organic solvent such as ether or ketone, and/or a fluorine-containing organic solvent having a boiling point of 40°C or lower.
The aqueous medium is preferably an aqueous medium solely containing water or an aqueous medium solely containing water and a fluorine-free organic solvent, and is more preferably an aqueous medium solely containing water because the polymerization of TFE can proceed smoothly.
The moisture content in the aqueous medium is preferably 90% or more, more preferably 95% or more, even more preferably 99.0% or more, yet more preferably 99.5% or more, and particularly preferably 99.9% or more, and may be 100% based on the mass of the aqueous medium because the polymerization of TFE can proceed smoothly.

(Modifying monomer)

In the production method of the present disclosure, it is also preferable to suspension-polymerize TFE and a modifying monomer. That is to say, polytetrafluoroethylene may be homopolytetrafluoroethylene solely containing a TFE unit, or may be modified polytetrafluoroethylene containing a TFE unit and a modifying-monomer unit that is based on a modifying monomer copolymerizable with TFE.
The amount of the modifying monomer added when polymerizing TFE is preferably 0.001% by mass or more, more preferably 0.01% by mass or more, even more preferably 0.03% by mass or more, and particularly preferably 0.05% by mass or more, and is preferably 1.0% by mass or less, more preferably 0.8% by mass or less, even more preferably 0.5% by mass or less, and particularly preferably 0.3% by mass or less, based on the amount of polytetrafluoroethylene to be obtained.
The modifying monomer is not limited as long as it can be copolymerized with TFE, and examples include fluoromonomers and non-fluoromonomers. One modifying monomer may be used singly, or multiple modifying monomers may be used.
Examples of the non-fluoromonomer include, but are not limited to, monomers represented by the general formula:

$$CH_2=CR^{Q1}-LR^{Q2}$$

wherein $R^{Q1}$ represents a hydrogen atom or an alkyl group; L represents a single bond, -CO-O-*, -O-CO-*, or -O-; * indicates the position of bonding to $R^{Q2}$; and $R^{Q2}$ represents a hydrogen atom, an alkyl group, or a nitrile group.
Examples of the non-fluoromonomer include methyl acrylate, methyl methacrylate, ethyl acrylate, ethyl methacrylate, propyl acrylate, propyl methacrylate butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. Among these, the non-fluoromonomer is preferably butyl methacrylate, vinyl acetate, or acrylic acid.
Examples of the fluoromonomer include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and perfluoroallyl ethers.
Examples of the perfluorovinyl ether include, but are not limited to, perfluoro unsaturated compounds represented by general formula (A):

$$CF_2=CF-ORf \qquad (A)$$

wherein Rf represents a perfluoroorganic group. The "perfluoro organic group" as used herein means an organic group in which all hydrogen atoms bonded to the carbon atoms are replaced with fluorine atoms. The perfluoro organic group may have ether oxygen.
Examples of the perfluorovinyl ether include perfluoro(alkyl vinyl ether) (PAVE) in which Rf is a perfluoroalkyl group having 1 to 10 carbon atoms in general formula (A). The perfluoroalkyl group preferably has 1 to 5 carbon atoms.
Examples of the perfluoroalkyl group in PAVE include a perfluoromethyl group, a perfluoroethyl group, a perfluoropropyl group, a perfluorobutyl group, a perfluoropentyl group, and a perfluorohexyl group.
Examples of the perfluorovinyl ether further include those represented by general formula (A) in which Rf is a perfluoro(alkoxyalkyl) group having 4 to 9 carbon atoms; those in which Rf is a group represented by the following formula:

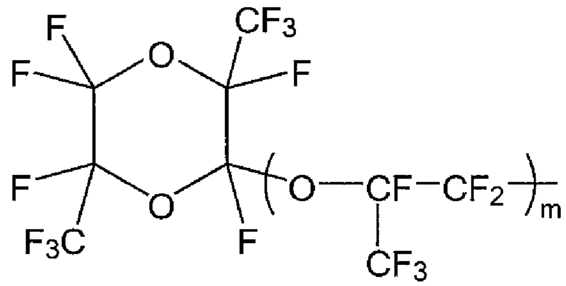

wherein m represents an integer of 0 or 1 to 4; and those in which Rf is a group represented by the following formula:

$CF_3CF_2CF_2$-(O-CF ($CF_3$)-$CF_2$)$_n$-

wherein n represents an integer of 1 to 4.

Examples of hydrogen-containing fluoroolefins include $CH_2$=$CF_2$, CHF=$CH_2$, CHF=$CF_2$, $CH_2$=$CFCF_3$, $CH_2$=$CHCF_3$, CHF=$CHCF_3$ (E-form), and CHF=$CHCF_3$ (Z-form).

Examples of the (perfluoroalkyl)ethylene (PFAE) include, but are not limited to, (perfluorobutyl) ethylene (PFBE), and (perfluorohexyl) ethylene.

Examples of perfluoroallyl ether include fluoromonomers represented by the general formula:

$CF_2$=CF-$CF_2$-ORf

wherein Rf represents a perfluoroorganic group.

Rf in the above general formula is the same as Rf in general formula (A). Rf is preferably a perfluoroalkyl group having 1 to 10 carbon atoms or a perfluoroalkoxyalkyl group having 1 to 10 carbon atoms. The perfluoroallyl ether is preferably at least one selected from the group consisting of $CF_2$=CF-$CF_2$-O-$CF_3$, $CF_2$=CF-$CF_2$-O-$C_2F_5$, $CF_2$=CF-$CF_2$-O-$C_3F_7$, and $CF_2$=CF-$CF_2$-O-$C_4F_9$, more preferably at least one selected from the group consisting of $CF_2$=CF-$CF_2$-O-$C_2F_5$, $CF_2$=CF-$CF_2$-O-$C_3F_7$, and $CF_2$=CF-$CF_2$-O-$C_4F_9$, and even more preferably $CF_2$=CF-$CF_2$-O-$CF_2CF_2CF_3$.

The modifying monomer, from the viewpoint of reactivity with TFE, is preferably at least one selected from the group consisting of hexafluoropropylene, perfluoro(alkyl vinyl ether), and (perfluoroalkyl)ethylene, more preferably at least one selected from the group consisting of hexafluoropropylene, perfluoro(methyl vinyl ether), perfluoro(propyl vinyl ether), (perfluorobutyl)ethylene, (perfluorohexyl)ethylene, and (perfluorooctyl)ethylene, and even more preferably at least one selected from the group consisting of perfluoro(methyl vinyl ether) and perfluoro(propyl vinyl ether).

(Chain transfer agent)

In the production method of the present disclosure, TFE can be polymerized also in the presence of a chain transfer agent. The use of a chain transfer agent enables the polymerization rate and the molecular weight to be regulated. Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The amount of the chain transfer agent used is usually 1 to 50,000 ppm by mass, and preferably 1 to 20,000 ppm by mass, based on the total amount of TFE fed. The amount of the chain transfer agent used is preferably an amount such that the chain transfer agent is completely consumed during the polymerization of TFE and does not remain in the composition containing polytetrafluoroethylene. Accordingly, the amount of the chain transfer agent used is more preferably 10,000 ppm by mass or less, even more preferably 5,000 ppm by mass or less, yet more preferably 1,000 ppm by mass or less, particularly preferably 500 ppm by mass or less, and most preferably 200 ppm by mass or less, based on the total amount of TFE fed.

The chain transfer agent may be added to the reactor at once before the beginning of polymerization, may be added at once after the beginning of polymerization, may be added in multiple portions during polymerization, or may be added continuously during polymerization.

(Fluorine-containing surfactant)

Suspension polymerization can be carried out in the presence or in the absence of a fluorine-containing surfactant. The fluorine-containing surfactant is not limited as long as it is a surfactant containing at least one fluorine atom, and conventionally known fluorine-containing surfactants can be used.

Examples of the fluorine-containing surfactant include anionic fluorine-containing surfactants. The anionic fluorine-containing surfactant may be, for example, a fluorine atomcontaining surfactant having 20 or fewer carbon atoms in total in the portion excluding the anionic group.

The fluorine-containing surfactant may also be a fluorine-containing surfactant in which the molecular weight of the anionic moiety is 1,000 or less.

The "anionic moiety" means a portion of the fluorine-containing surfactant excluding the cation. For example, in the case of $F(CF_2)_{n1}COOM$ represented by formula (I), which will be described below, the anionic moiety is the "$F(CF_2)_{n1}COO$" portion.

Examples of the fluorine-containing surfactant also include fluorine-containing surfactants having a Log POW of 3.5 or less. The Log POW is a partition coefficient between 1-octanol and water, which is represented by Log P (wherein P represents the ratio between the concentration of the fluorine-containing surfactant in octanol and the concentration of the fluorine-containing surfactant in water in a phase-separated octanol/water (1:1) liquid mixture containing the fluorine-containing surfactant).

The Log POW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6% by mass $HClO_4$ solution = 1/1 (vol/vol%), flow rate: 1.0 ml/min, sample volume: 300 μL, column temperature: 40°C, detection light: UV210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

Examples of the anionic fluorine-containing surfactant include a compound represented by the following general formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group having 3 to 20 carbon atoms in which some or all of H are replaced with F, the alkylene group optionally containing one or more ether bonds in which some of H are optionally replaced with Cl; and $Y^0$ is an anionic group.

The anionic group $Y^0$ may be -COOM, $-SO_2M$, or $-SO_3M$, and may be -COOM or $-SO_3M$.

M is H, a metal atom, $NR^7_4$, optionally substituted imidazolium, optionally substituted pyridinium, or optionally substituted phosphonium, and $R^7$ is H or an organic group.

Examples of the metal atom include alkali metals (Group 1) and alkaline earth metals (Group 2), such as Na, K, or Li.

$R^7$ may be H or a $C_{1-10}$ organic group, may be H or a $C_{1-4}$ organic group, and may be H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

$Rf^{n0}$ may be an alkylene group in which 50% or more H atoms are replaced with fluorine atoms.

Examples of the compound represented by general formula ($N^0$) include a compound represented by the following general formula ($N^1$):

$$X^{n0}\text{-}(CF_2)_{m1}\text{-}Y^0 \qquad (N^1)$$

wherein $X^{n0}$ is H, Cl, or F; m1 is an integer of 3 to 15; and $Y^0$ is as defined above;

a compound represented by the following general formula ($N^2$):

$$Rf^{n1}\text{-}O\text{-}(CF(CF_3)CF_2O)_{m2}CFX^{n1}\text{-}Y^0 \qquad (N^2)$$

wherein $Rf^{n1}$ is a perfluoroalkyl group having 1 to 5 carbon atoms; m2 is an integer of 0 to 3; $X^{n1}$ is F or $CF_3$; and $Y^0$ is as defined above;

a compound represented by the following general formula ($N^3$):

$$Rf^{n2}(CH_2)_{m3}\text{-}(Rf^{n3})_q\text{-}Y^0 \qquad (N^3)$$

wherein $Rf^{n2}$ is a partially or fully fluorinated alkyl group having 1 to 13 carbon atoms and optionally containing an ether bond and/or a chlorine atom; m3 is an integer of 1 to 3; $Rf^{n3}$ is a linear or branched perfluoroalkylene group having 1 to 3 carbon atoms, q is 0 or 1; and $Y^0$ is as defined above;

a compound represented by the following general formula ($N^4$):

$$Rf^{n4}\text{-O-}(CY^{n1}Y^{n2})_pCF_2\text{-}Y^0 \qquad (N^4)$$

wherein $Rf^{n4}$ is a linear or branched, partially or fully fluorinated alkyl group having 1 to 12 carbon atoms and optionally containing an ether bond; $Y^{n1}$ and $Y^{n2}$ are the same or different and are each independently H or F; p is 0 or 1; and $Y^0$ is as defined above; and

a compound represented by the following general formula ($N^5$):

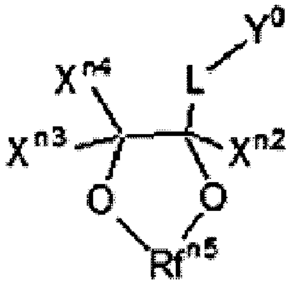

($N^5$)

wherein $X^{n2}$, $X^{n3}$, and $X^{n4}$ are the same or different and are each independently H, F, or a linear or branched, partially or fully fluorinated alkyl group having 1 to 6 carbon atoms and optionally containing an ether bond, $Rf^{n5}$ is a linear or branched, partially or fully fluorinated alkylene group having 1 to 3 carbon atoms and optionally containing an ether bond, L is a linking group, and $Y^0$ is as defined above, provided that the total number of carbon atoms of $X^{n2}$, $X^{n3}$, $X^{n4}$, and $Rf^{n5}$ is 18 or less.

More specific examples of the compound represented by general formula ($N^0$) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

$$F(CF_2)_{n1}COOM \qquad (I)$$

wherein n1 is an integer of 3 to 14; and M is H, a metal atom, $NR^7_4$, optionally substituted imidazolium, optionally substituted pyridinium, or optionally substituted phosphonium, wherein $R^7$ is H or an organic group.

The ω-H perfluorocarboxylic acid (II) is represented by the following general formula (II):

$$H(CF_2)_{n2}COOM \qquad (II)$$

wherein n2 is an integer of 4 to 15; and M is as defined above.

The perfluoroethercarboxylic acid (III) is represented by the following general formula (III):

$$Rf^1\text{-O-}(CF\ (CF_3)CF_2O)_{n3}CF(CF_3)COOM \qquad (III)$$

wherein $Rf^1$ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

$Rf^2(CH_2)_{n4}Rf^3COOM$ (IV)

wherein $Rf^2$ is a perfluoroalkyl group having 1 to 5 carbon atoms; $Rf^3$ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

$Rf^4\text{-O-}CY^1Y^2CF_2\text{-COOM}$ (V)

wherein $Rf^4$ is a linear or branched partially or fully fluorinated alkyl group having 1 to 12 carbon atoms and optionally containing an ether bond and/or a chlorine atom; $Y^1$ and $Y^2$ are the same or different and are each H or F; and M is as defined above.

The perfluoroalkylsulfonic acid (VI) is represented by the following general formula (VI):

$F\ (CF_2)_{n5}SO_3M$ (VI)

wherein n5 is an integer of 3 to 14; and M is as defined above.

The ω-H perfluorosulfonic acid (VII) is represented by the following general formula (VII):

$H(CF_2)_{n6}SO_3M$ (VII)

wherein n6 is an integer of 4 to 14; and M is as defined above.

The perfluoroalkylalkylenesulfonic acid (VIII) is represented by the following general formula (VIII):

$Rf^5(CH_2)_{n7}SO_3M$ (VIII)

wherein $Rf^5$ is a perfluoroalkyl group having 1 to 13 carbon atoms; n7 is an integer of 1 to 3; and M is as defined above.

The alkylalkylenecarboxylic acid (IX) is represented by the following general formula (IX):

$Rf^6(CH_2)_{n8}COOM$ (IX)

wherein $Rf^6$ is a linear or branched, partially or fully fluorinated alkyl group having 1 to 13 carbon atoms and optionally containing an ether bond, n8 is an integer of 1 to 3, and M is as defined above.

The fluorocarboxylic acid (X) is represented by the following general formula (X):

$Rf^7\text{-O-}Rf^e\text{-O-}CF_2\text{-COOM}$ (X)

wherein $Rf^7$ is a linear or branched, partially or fully fluorinated alkyl group having 1 to 6 carbon atoms and optionally containing an ether bond and/or a chlorine atom; $Rf^8$ is a linear or branched, partially or fully fluorinated alkyl group having 1 to 6 carbon atoms; and M is as defined above.

The alkoxyfluorosulfonic acid (XI) is represented by the following general formula (XI):

$Rf^9\text{-O-}CY^1Y^2CF_2\text{-}SO_3M$ (XI)

wherein $Rf^9$ is a linear or branched partially or fully fluorinated alkyl group having 1 to 12 carbon atoms and optionally containing an ether bond and optionally containing chlorine; $Y^1$ and $Y^2$ are the same or different and are each H or F; and M is as defined above.

The compound (XII) is represented by the following general formula (XII):

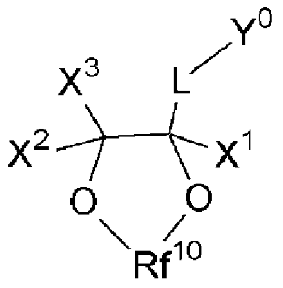

(XII)

wherein $X^1$, $X^2$, and $X^3$ may be the same or different and are H, F, and a linear or branched partially or fully fluorinated alkyl group having 1 to 6 carbon atoms and optionally containing an ether bond; $Rf^{10}$ is a perfluoroalkylene group having 1 to 3 carbon atoms; L is a linking group; and $Y^0$ is an anionic group.

$Y^0$ may be -COOM, $-SO_2M$, or $-SO_3M$, and may be $-SO_3M$ or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

$$Rf^{11}\text{-O-}(CF_2CF(CF_3)O)_{n9}(CF_2O)_{n10}CF_2COOM \quad \text{(XIII)}$$

wherein $Rf^{11}$ is a fluoroalkyl group having 1 to 5 carbon atoms and containing chlorine; n9 is an integer of 0 to 3; n10 is an integer of 0 to 3; and M is as defined above. Examples of the compound (XIII) include $CF_2ClO(CF_2CF(CF_3)O)_{n9}(CF_2O)_{n10}CF_2COONH_4$ (a mixture having an average molecular weight of 750, wherein n9 and n10 are as defined above).

As described above, examples of the anionic fluorine-containing surfactant include a carboxylic acid-based surfactant and a sulfonic acid-based surfactant.

The fluorine-containing surfactant may be one fluorine-containing surfactant, or may be a mixture containing two or more fluorine-containing surfactants.

The fluorine-containing surfactant preferably does not have a methylene group ($-CH_2-$), and more preferably does not have a C-H bond. The use of a fluorine-containing surfactant that does not have a methylene group ($-CH_2-$) or a C-H bond within the molecule enables TFE to be smoothly polymerized in the presence of an aqueous medium.

The number of H atoms that the hydrophobic group of the fluorine-containing surfactant has is preferably 0 or 1, and more preferably 0. The use of a fluorine-containing surfactant in which the number of H atoms bonded to carbon atoms constituting the hydrophobic group is small enables TFE to be smoothly polymerized in the presence of an aqueous medium. The number of carbon atoms in the hydrophobic group of the fluorine-containing surfactant having a hydrophobic group and a hydrophilic group is preferably 1 to 50, more preferably 3 to 20, and even more preferably 6 to 12. The hydrophobic group usually constitutes the above-described "portion excluding the anionic group" in the molecular structure of the fluorine-containing surfactant. Examples of the hydrophilic group include groups exemplified as the anionic group $Y^0$. The fluorine-containing surfactant may be a saturated fluorinated surfactant in which all carbon atoms bonded to the hydrophobic group are substituted with fluorine atoms.

Examples of fluorine-containing surfactants, among the above-described anionic fluorine-containing surfactants, include compounds represented by general formula ($N^1$), compounds represented by general formula ($N^2$), and compounds represented by general formula ($N^4$):

$$Rf^{n4}\text{-O-}(CY^{n1}F)_pCF_2\text{-}Y^0 \quad (N^4)$$

wherein $Rf^{n4}$ is a linear or branched, partially or fully fluorinated alkyl group having 1 to 12 carbon atoms and optionally containing an ether bond (provided that those having $-CH_2-$ are excluded), $Y^{n1}$ is H or F, p is 0 or 1, and $Y^0$ is as defined above; and compounds represented by general formula ($N^5$):

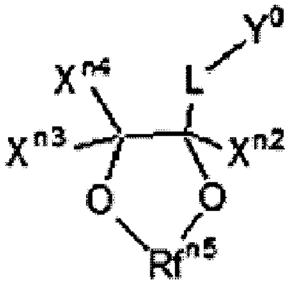

(N[5])

wherein $X^{n2}$, $X^{n3}$, and $X^{n4}$ may be the same or different and are each independently H, F, or a linear or branched, partially or fully fluorinated alkyl group having 1 to 6 carbon atoms and optionally containing an ether bond (provided that those having $-CH_2-$ are excluded), provided that $X^{n3}$ and $X^{n4}$ are not simultaneously H; $Rf^{n5}$ is a linear or branched, partially or fully fluorinated alkylene group having 1 to 3 carbon atoms and optionally containing an ether bond (provided that those having $-CH_2-$ are excluded); L is a linking group; and $Y^0$ is as defined above, provided that the total number of carbon atoms of $X^{n2}$, $X^{n3}$, $X^{n4}$, and $Rf^{n5}$ is 18 or less.

Among the above-described anionic fluorine-containing surfactants, the fluorine-containing surfactant is more preferably at least one selected from the group consisting of perfluorocarboxylic acid (I) represented by general formula (I), ω-H perfluorocarboxylic acid (II) represented by general formula (II), perfluoroethercarboxylic acid (III) represented by general formula (III), perfluoroalkylalkylenecarboxylic acid (IV) represented by general formula (IV), perfluoroalkoxyfluorocarboxylic acid (V) represented by general formula (V), perfluoroalkylsulfonic acid (VI) represented by general formula (VI), ω-H perfluorosulfonic acid (VII) represented by general formula (VII), perfluoroalkylalkylenesulfonic acid (VIII) represented by general formula (VIII), fluorocarboxylic acid (X) represented by general formula (X): $Rf^7$-O-$Rf^8$-O-$CF_2$-COOM

wherein $Rf^7$ is a linear or branched, partially or fully fluorinated alkyl group having 1 to 6 carbon atoms and optionally containing an ether bond and/or a chlorine atom (provided that those having $-CH_2-$ are excluded), $Rf^8$ is a linear or branched, partially or fully fluorinated alkyl group having 1 to 6 carbon atoms (provided that those having $-CH_2-$are excluded), and M is as defined above, an alkoxyfluorosulfonic acid (XI) represented by general formula (XI): $Rf^9$-O-$CY^1FCF_2$-$SO_3M$

wherein $Rf^9$ is a linear or branched, partially or fully fluorinated alkyl group having 1 to 12 carbon atoms, optionally containing chlorine, and optionally containing an ether bond (provided that those having $-CH_2-$ are excluded), $Y^1$ is H or F, and M is as defined above, a compound (XII) represented by general formula (XII):

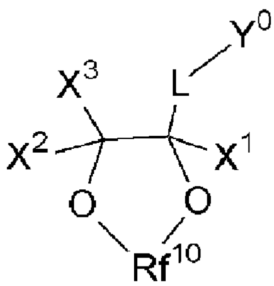

(XII)

wherein $X^1$, $X^2$, and $X^3$ may be the same or different and are each independently H, F, and a linear or branched, partially or fully fluorinated alkyl group having 1 to 6 carbon atoms and optionally containing an ether bond (provided that those having $-CH_2-$ are excluded), provided that $X^2$ and $X^3$ are not simultaneously H, $Rf^{10}$ is a perfluoroalkylene group having 1 to 3 carbon atoms, L is a linking group, and $Y^0$ is an anionic group, and

a compound (XIII) represented by general formula (XIII): $Rf^{11}$-O-$(CF_2CF(CF_3)O)_{n9}(CF_2O)_{n10}CF_2COOM$

wherein $Rf^{11}$ is a fluoroalkyl group having 1 to 5 carbon atoms containing chlorine (provided that those having $-CH_2-$ are excluded), n9 is an integer of 0 to 3, n10 is an integer of 0 to 3, and M is as defined above. The use of such a fluorine-containing surfactant enables TFE to be smoothly polymerized in the presence of an aqueous medium.

Examples of the fluorine-containing surfactant include compounds represented by the following formulae. The fluorine-containing surfactant may be a mixture of these compounds.

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$,

$CF_2ClCF(CF_3)OCF_2CF(CF_3)OCF_2COOM$,

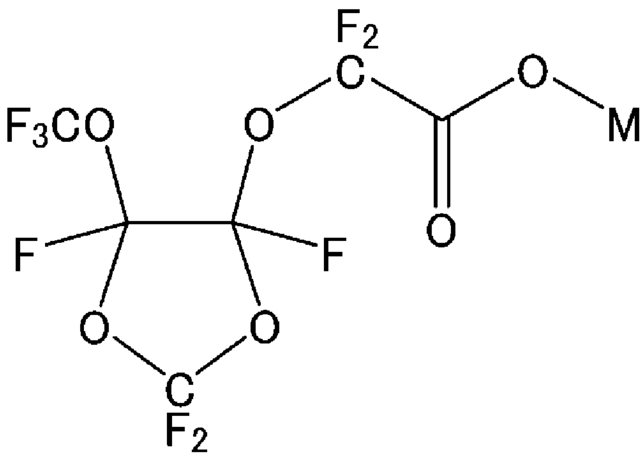

wherein M is H, a metal atom, $NR^7_4$, optionally substituted imidazolium, optionally substituted pyridinium, or optionally substituted phosphonium, and $R^7$ is H or an organic group.

The amount of the fluorine-containing surfactant added is preferably 10 ppm by mass to 10% by mass, is more preferably 100 ppm by mass or more and even more preferably 300 ppm by mass or more, and is more preferably 5% by mass or less and even more preferably 1% by mass or less, based on the aqueous medium.

Suspension polymerization can be carried out in the presence or in the absence of a fluorine-containing surfactant. The amount of the fluorine-containing surfactant added in the suspension polymerization method is preferably 2,000 ppm by mass or less, more preferably 1,000 ppm by mass or less, even more preferably 500 ppm by mass or less, particularly preferably 200 ppm by mass or less, and most preferably 100 ppm by mass or less. The amount of the fluorine-containing surfactant may be 0 ppm by mass.

(Polymerization conditions)

The polymerization of TFE can be carried out at normal pressure and temperature. Usually, the polymerization temperature is 5 to 120°C, and the polymerization pressure is 0.05 to 10 MPaG. The polymerization temperature and the polymerization pressure are suitably determined according to the type of monomer, the molecular weight of the target polytetrafluoroethylene, the reaction rate, and the like.

(Termination of polymerization)

In the production method of the present disclosure, after TFE is polymerized to produce non melt-processible polytetrafluoroethylene, a polymerization terminator is fed to the reactor, or TFE and in some cases the modifying monomer remaining in the reactor are removed from the reactor. By these operations, the polymerization of TFE can be terminated.

The polymerization terminator (a radical scavenger) may be a compound that is not capable of re-initiating the polymerization after being added or chain-transferred to a free radical in the polymerization system. Specifically, used is a compound that readily undergoes a chain transfer reaction with a primary radical or a propagating radical and then generates a stable radical that does not react with a monomer or a compound that readily undergoes an addition reaction with a primary radical or a propagating radical to generate a stable radical. The activity of what is commonly referred to as a chain transfer agent is characterized by the chain transfer constant and the reinitiation efficiency, and, among chain transfer agents, those having almost 0% reinitiation efficiency are referred to as polymerization terminators. The polymerization terminator is preferably at least one selected from the group consisting of aromatic hydroxy compounds, aromatic amines, N,N-diethylhydroxylamine, quinone compounds, terpenes, thiocyanates, and cupric chloride ($CuCl_2$). Examples of aromatic hydroxy compounds include unsubstituted phenols, polyhydric phenols, salicylic acid, m- or p-salicylic acid, gallic acid, and naphthol. Examples of unsubstituted phenols include o-, m-, or p-nitrophenol, o-, m-, or p-aminophenol, and p-nitrosophenol. Examples of polyhydric phenols include catechol, resorcin, hydroquinone, pyrogallol, phloroglucin, and naphthresorcinol. Examples of aromatic amines include o-, m-, or p-phenylenediamine and benzidine. Examples of quinone compounds include hydroquinone, o-, m- or p-benzoquinone, 1,4-naphthoquinone, and alizarin. Examples of thiocyanates include ammonium thiocyanate ($NH_4SCN$), potassium thiocyanate (KSCN), and sodium thiocyanate (NaSCN). In particular, the polymerization terminator is preferably a quinone compound, and more preferably hydroquinone.

The method by which TFE remaining in the reactor is removed from the reactor is not limited. After polytetrafluoroethylene is produced, TFE may be removed from the reactor by terminating the stirring of the contents of the reactor if desired and discharging TFE until the pressure inside the reactor reaches normal pressure, TFE may be removed from the reactor by reducing the pressure inside the reactor to lower than 0.0 MPaG, or TFE in the reactor may be replaced with an inert gas such as nitrogen gas by feeding the inert gas to the reactor. TFE may be removed from the reactor as a result of reacting the entirety of TFE in the reactor to convert it to polytetrafluoroethylene. As long as the removal from the reactor of TFE remaining in the reactor can be carried out to such an extent that the polymerization reaction of TFE is sufficiently terminated, a small amount of residual TFE may be allowed in the reactor. Removed TFE can be recovered by a known means. Recovered TFE may be reused to produce polytetrafluoroethylene.

A preferable method for removing TFE from the reactor may be a method involving, after polytetrafluoroethylene is produced, terminating the stirring of the contents of the reactor if desired, reducing the pressure inside the reactor to lower than 0.0 MPaG, and then feeding an inert gas to the reactor. Reducing the pressure inside the reactor and feeding an inert gas may be repeated multiple times.

When TFE is polymerized at a temperature higher than normal temperature, the reactor may be cooled before removing TFE from the reactor or after removing TFE from the reactor. When TFE is removed from the reactor by means of, for example, discharging or nitrogen-purging, an unreacted fluoromonomer especially in a liquid form may remain in the reactor, and thus cooling the reactor can sufficiently suppress the reaction of the unreacted fluoromonomer from proceeding.

(Composition obtained by polymerization)

Suspension polymerization of TFE usually provides a composition containing an aqueous medium and non melt-processible polytetrafluoroethylene.

When a fluorine-containing surfactant is used in the polymerization of TFE, the resulting composition usually contains, other than polytetrafluoroethylene, the fluorine-containing surfactant used in the polymerization of TFE. The composition obtained by the polymerization of TFE may contain, other than polytetrafluoroethylene, TFE and in some cases a fluorine-containing compound having a hydrophilic group, which is produced by the polymerization of a modifying monomer.

Herein, the hydrophilic group contained in the fluorine-containing compound is preferably an anionic group such as an acid group, e.g., $-NH_2$, $-PO_3M$, $-OPO_3M$, $-SO_3M$, $-OSO_3M$, and -COOM, wherein M represents a cation. In particular, the hydrophilic group is preferably $-SO_3M$ or -COOM, and more preferably -COOM.

A typical fluorine-containing compound having a hydrophilic group in the composition obtained by polymerization is a fluorine-containing compound having a hydrophilic group and having a molecular weight of 1,000 g/mol or less. The production method of the present disclosure makes it possible to produce polytetrafluoroethylene which has a molecular weight of 1,000 g/mol or less and in which the content of a fluorine-containing compound having a hydrophilic group is small.

In one embodiment, the composition obtained by the polymerization contains as a fluorine-containing compound having a hydrophilic group a fluorine-containing surfactant added during the polymerization. The fluorine-containing surfactant added during the polymerization is as described above for the fluorine-containing surfactant used in the polymerization of TFE.

The content of the fluorine-containing surfactant in the composition obtained by the polymerization may be 10 ppm by mass or more, 100 ppm by mass or more, or 1,000 ppm by mass or more, and may be 10% by mass or less, 5% by mass or less, or 1% by mass or less, based on polytetrafluoroethylene in the composition.

The content of the fluorine-containing compound having a hydrophilic group in the composition obtained by the polymerization (the total amount of the content of the fluorine-containing surfactant added during the polymerization and the content of the fluorine-containing compound having a hydrophilic group produced by the polymerization of TFE and in some cases a modifying monomer) may be 10 ppm by mass or more, 100 ppm by mass or more, or 1,000 ppm by mass or more, and may be 10% by mass or less, 5% by mass or less, or 1% by mass or less, based on the polytetrafluoroethylene in the composition.

In one embodiment, the composition obtained by the polymerization contains a compound represented by the following general formula (1) as the fluorine-containing compound having a hydrophilic group:

General formula (1): $[X\text{-}Rf\text{-}A^-]_iM^{i+}$

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; $A^-$ is an acid group; $M^{i+}$ is a cation having a valence of i; and i represents an integer of 1 to 3.

In one embodiment, the composition obtained by the polymerization contains a compound represented by the following general formula (2) as the fluorine-containing compound having a hydrophilic group:

General formula (2): $[C_{n-1}F_{2n-1}COO^-]M^+$

wherein n is an integer of 9 to 14, and $M^+$ represents a cation.

The compound represented by general formula (2) (perfluoroalkanoic acid) is known to be formed during polymerization when perfluoro(alkyl vinyl ether) or the like is used as a fluoromonomer (see International Publication No. WO 2019/161153).

In one embodiment, the composition obtained by the polymerization contains a compound represented by the following general formula (3) as the fluorine-containing compound having a hydrophilic group:

General formula (3): $[R^1\text{-}O\text{-}L\text{-}CO_2^-]M^+$

wherein $R^1$ is a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated, or fully fluorinated alkylene group; and $M^+$ represents a cation.

In one embodiment, the composition obtained by the polymerization contains a compound represented by general formula (4) as the fluorine-containing compound having a hydrophilic group:

General formula (4): $[H\text{-}(CF_2)_mCO_2^-]M^+$

wherein m is an integer of 3 to 19, and $M^+$ represents a cation.

(Feeding of polymerization inhibitor after polymerization)

In the present disclosure, after a polymerization terminator is fed to the reactor or after TFE remaining in the reactor is removed from the reactor, a polymerization inhibitor for inhibiting polymerization of remaining radicals is fed to the reactor.

By feeding a polymerization inhibitor to the reactor or by removing TFE remaining in the reactor from the reactor, the polymerization of TFE usually terminates. In the production method of the present disclosure, after the polymerization of TFE is terminated, a polymerization inhibitor for inhibiting polymerization of residual radicals is fed to the reactor to bring the composition in the reactor into contact with the newly fed polymerization inhibitor. When the polymerization terminator is fed to the reactor before terminating suspension polymerization, i.e., during suspension polymerization, the polymerization terminator may also remain after the polymerization is terminated. The polymerization inhibitor for inhibiting polymerization of residual radicals is fed to the reactor after the polymerization is terminated, and is thus distinguished from the polymerization terminator that is fed to the reactor before the polymerization is terminated and that also remains after the polymerization is terminated.

It was unexpectedly found that after the polymerization of TFE and in some cases a modifying monomer is terminated, feeding the polymerization inhibitor enables polytetrafluoroethylene in which the content of a fluorine-containing compound having a hydrophilic group is small to be produced. At the time of filing the present application, no data was available that shows radicals remain in the reactor after the polymerization is terminated. However, from the data showing that polytetrafluoroethylene in which the content of a fluorine-containing compound having a hydrophilic group is small can be produced by adding a polymerization inhibitor, it is conjectured that residual radicals are present in the composition after the polymerization is terminated, and the polymerization inhibitor fed after the polymerization is terminated inhibits the polymerization of residual radicals.

The polymerization inhibitor for inhibiting polymerization of residual radicals is preferably at least one selected from the group consisting of alcohols, fatty acid esters, alkanes, halogenated hydrocarbons, cycloalkanes, ketones, mercaptans, sulfur, aromatic hydroxy compounds, aromatic amines, aliphatic amines, quinone compounds, hydroquinone compounds, polyoxy compounds, nitro compounds, nitroso compounds, terpenes, thiocyanates, and cupric chloride ($CuCl_2$).

Examples of alcohols include alcohols having 1 to 5 carbon atoms, such as methanol and isopropanol.

Examples of fatty acid esters include dimethyl malonate, diethyl malonate, methyl acetate, ethyl acetate, butyl acetate, and dimethyl succinate.

Examples of alkanes include isopentane, methane, ethane, and propane.

Examples of halogenated hydrocarbons include carbon tetrachloride.

Examples of cycloalkanes include cyclohexane.

Examples of ketones include acetone.

Examples of mercaptans include methyl mercaptan.

Examples of aromatic hydroxy compounds include unsubstituted phenols, polyhydric phenols, salicylic acid, mor p-salicylic acid, gallic acid, and naphthol.

Examples of aromatic amines include o-, m-, or p-phenylenediamine and benzidine.

Examples of aliphatic amines include N,N-dimethylhydroxyamine.

Examples of quinone compounds include hydroquinone, o-, m- or p-benzoquinone, 1,4-naphthoquinone, and alizarin.

Examples of polyoxy compounds include polyoxyethylene and polyoxypropylene.

Examples of nitro compounds and nitroso compounds include o-, m-, or p-nitrophenol, o-, m-, or p-aminophenol, and p-nitrosophenol.

Examples of terpenes include monoterpene, sesquiterpene, diterpene, sesterterpene, triterpene, and tetraterpene.

Examples of thiocyanates include ammonium thiocyanate ($NH_4SCN$), potassium thiocyanate (KSCN), and sodium thiocyanate (NaSCN).

In particular, the polymerization inhibitor for inhibiting polymerization of residual radicals is preferably an alcohol having 1 to 5 carbon atoms, and more preferably at least one selected from the group consisting of methanol and isopropanol.

The polymerization of TFE and termination as well as the treatment with the polymerization inhibitor for inhibiting polymerization of residual radicals are usually carried out in the same reactor. In one embodiment, TFE remaining in the reactor is removed, and then the polymerization inhibitor for inhibiting polymerization of residual radicals is fed to the same reactor. In one embodiment, after the composition is prepared, TFE in the reactor that is in a pressurized state is partially released from the reactor, thereby the pressure in the reactor is reduced to normal pressure, and the polymerization inhibitor for inhibiting polymerization of residual radicals is fed to the reactor.

The feeding of the polymerization inhibitor for inhibiting polymerization of residual radicals to the reactor is preferably carried out promptly after the composition containing an aqueous medium and polytetrafluoroethylene is prepared. By promptly treating the composition obtained by the polymerization with the polymerization inhibitor without leaving the composition to stand, polytetrafluoroethylene in which the content of a fluorine-containing compound having a hydrophilic group is even smaller can be obtained.

For example, the polymerization inhibitor for inhibiting polymerization of residual radicals is fed to the reactor

preferably within 10 minutes and more preferably within 5 minutes from the time when the polymerization terminator is fed to the reactor or the time when TFE remaining in the reactor is removed from the reactor.

The method for feeding the polymerization inhibitor for inhibiting polymerization of residual radicals is not limited. The polymerization inhibitor may be directly fed to the reactor, or a solution containing the polymerization inhibitor may be prepared and fed to the reactor. The polymerization inhibitor may be fed while stirring the composition in the reactor, or after feeding the polymerization inhibitor, the composition in the reactor may be stirred.

The content of polytetrafluoroethylene in the composition to be treated with the polymerization inhibitor for inhibiting polymerization of residual radicals may be, for example, 5 to 75% by mass. The content of polytetrafluoroethylene in the composition is a value obtained by drying 1 g of the composition in an air dryer at 150°C for 60 minutes, measuring the mass of non-volatile matter, and calculating the proportion of the mass of the non-volatile matter based on the mass (1 g) of the polymerization dispersion in percentage.

The polymerization inhibitor for inhibiting polymerization of residual radicals is fed in an amount of preferably 0.001 to 10% by mass, more preferably 0.005% by mass or more, even more preferably 0.01% by mass or more, yet more preferably 0.05% by mass or more, and particularly preferably 0.10% by mass or more, and is more preferably 5.0% by mass or less and even more preferably 1.0% by mass or less, based on the aqueous medium.

In the production method of the present disclosure, it is preferable that the polymerization inhibitor for inhibiting polymerization of residual radicals is fed to the reactor, and the composition in the reactor is brought into sufficient contact with the polymerization inhibitor.

The temperature of the composition when bringing the composition into contact with the polymerization inhibitor for inhibiting polymerization of residual radicals is preferably 5°C or higher, more preferably 15°C or higher, even more preferably 30°C or higher, and yet more preferably 35°C or higher, and is preferably 85°C or lower, more preferably 75°C or lower, even more preferably 65°C or lower, and yet more preferably 55°C or lower.

The time for bringing the composition into contact with the polymerization inhibitor for inhibiting polymerization of residual radicals is preferably 1 minute or longer, more preferably 5 minutes or longer, even more preferably 10 minutes or longer, and yet more preferably 30 minutes or longer, and is preferably 24 hours or shorter, more preferably 12 hours or shorter, and even more preferably 6 hours or shorter.

The contact between the composition and the polymerization inhibitor can be carried out while stirring the composition in the reactor. Stirring is preferably carried out with stirring force sufficient to bring the composition and the polymerization inhibitor into sufficient contact while suppressing aggregation and fibrillation of polytetrafluoroethylene in the composition.

In one embodiment, after the composition is prepared by polymerizing TFE while stirring the aqueous medium, the composition is brought into contact with the polymerization inhibitor while stirring the composition at a stirring speed of -80% or more to +50% or less compared to the stirring speed during the polymerization. The lower limit of the stirring speed is, in the ascending order of preference, -75% or more, -50% or more, -25% or more, and -10% or more, and the upper limit of the stirring speed is preferably +25% or less and more preferably +0% or less. In this way, by bringing the composition into contact with the polymerization inhibitor while stirring the composition with stirring force similar to that employed in the polymerization of TFE, the composition and the polymerization inhibitor can be brought into sufficient contact with each other while suppressing aggregation and fibrillation of polytetrafluoroethylene in the composition, and thus polytetrafluoroethylene in which the content of a fluorine-containing compound having a hydrophilic group is even smaller can be obtained.

(Washing, drying, pulverizing, forming)

After the composition obtained by the polymerization is treated with the polymerization inhibitor for inhibiting polymerization of residual radicals, polytetrafluoroethylene in the composition can be washed or dried.

In the production method of the present disclosure, TFE is polymerized by a suspension polymerization method, and thus polytetrafluoroethylene can be recovered from the composition as suspension-polymerized particles in a wet state. Accordingly, after the composition obtained by the polymerization is treated with the polymerization inhibitor for inhibiting polymerization of residual radicals, polytetrafluoroethylene (suspension-polymerized particles) in the composition can be recovered and then washed or dried.

In one embodiment of the production method of the present disclosure, after the polymerization inhibitor for inhibiting polymerization of residual radicals is fed to the reactor to bring the composition in the reactor into contact with the polymerization inhibitor, polytetrafluoroethylene is washed. When washing polytetrafluoroethylene, water or an organic solvent can be used. Washing may be carried out once or multiple times.

Examples of the organic solvent used in washing include ethers, halogenated hydrocarbons, aromatic hydrocarbons, pyridine, nitriles, nitrogen-containing polar organic compounds, dimethyl sulfoxide, and alcohols.

In one embodiment of the production method of the present disclosure, after the polymerization inhibitor for inhibiting polymerization of residual radicals is fed to the reactor to bring the composition in the reactor into contact with the

polymerization inhibitor, polytetrafluoroethylene is dried.

An example of the method for drying polytetrafluoroethylene may be a method involving a dryer. Examples of the dryer include hot-air dryers, box-type dryers, band dryers, tunnel dryers, jet dryers, moving-bed dryers, rotary dryers, fluidized-bed dryers, pneumatic conveying dryers, disk dryers, cylindrical agitating dryers, invertedcone agitating dryers, microwave devices, vacuum heat treatment devices, box-type electric furnaces, flash dryers, vibration dryers, belt dryers, extrusion dryers, and spray dryers.

The temperature at which polytetrafluoroethylene is dried is preferably lower than 300°C, more preferably 280°C or lower, and even more preferably 250°C or lower, and is preferably 50°C or higher, more preferably 100°C or higher, even more preferably 120°C or higher, and particularly preferably 140°C or higher. The drying temperature is the temperature of the atmosphere surrounding polytetrafluoroethylene, and when hot air is used in drying, the drying temperature can be determined by measuring the temperature of hot air. The temperature of hot air can be measured at the inlet through which hot air is fed to the dryer or at the outlet through which hot air is discharged from the dryer, and is preferably measured at the outlet.

Polytetrafluoroethylene before being dried may be dehydrated. An example of the method for dehydrating wet polytetrafluoroethylene may be a dehydration method involving a dehydrator. Examples of the dehydrator include vibration dehydrators, filtration dehydrators, and centrifugal dehydrators.

In one embodiment of the production method of the present disclosure, after the polymerization inhibitor for inhibiting polymerization of residual radicals is fed to the reactor to bring the composition in the reactor into contact with the polymerization inhibitor, polytetrafluoroethylene is pulverized. Pulverization may be carried out after polytetrafluoroethylene is dried, may be carried out after polytetrafluoroethylene is washed, or may be carried out while washing polytetrafluoroethylene. In one embodiment, polytetrafluoroethylene is pulverized to produce pulverized polytetrafluoroethylene, the pulverized polytetrafluoroethylene is washed, and the washed polytetrafluoroethylene is dried. In another embodiment, polytetrafluoroethylene is coarsely pulverized to produce coarsely pulverized polytetrafluoroethylene, the coarsely pulverized polytetrafluoroethylene is finely pulverized while being washed to produce finely pulverized polytetrafluoroethylene, the finely pulverized polytetrafluoroethylene is further washed, and the washed polytetrafluoroethylene is dried.

Pulverization may be wet pulverization or dry pulverization. An example of the method for pulverizing polytetrafluoroethylene may be a pulverization method involving a pulverizer. Examples of the pulverizer include impact-type pulverizers such as hammer mills, pin mills, highspeed rotary mills and jet mills, and attrition-type pulverizers such as cutter mills, feather mills and colloid mills that pulverize polytetrafluoroethylene by shearing force generated by a rotary blade and an outer stator (a fixed blade). In pulverization, multiple pulverizers may be used in combination.

The temperature at which the pulverization treatment is carried out is preferably -200 to 50°C, more preferably 1°C or higher, more preferably 40°C or lower, and even more preferably 30°C or lower.

An example of the method for pulverizing polytetrafluoroethylene while washing it may be a method involving pulverizing polytetrafluoroethylene in water or an organic solvent. For example, water or an organic solvent and polytetrafluoroethylene may be simultaneously fed to an attrition-type pulverizer such as a cutter mill to pulverize polytetrafluoroethylene, or water or an organic solvent and polytetrafluoroethylene may be mixed in advance, and the mixture may be fed to a pulverizer to pulverize polytetrafluoroethylene.

Pulverization may be carried out once, or may be carried out repeatedly until pulverized particles having a desired average particle size or a desired particle size distribution can be produced.

After polytetrafluoroethylene is pulverized, the resulting pulverized particles may be classified by a known method such as pneumatic classification. By classification, fine particles having a very small particle size and coarse particles having a very large particle size are removed, and thus polytetrafluoroethylene having a desired average particle size or a desired particle size distribution can be obtained.

(Polytetrafluoroethylene)

The use of the production method of the present disclosure makes it possible to obtain polytetrafluoroethylene in which the content of a fluorine-containing compound having a hydrophilic group is small. The form of polytetrafluoroethylene obtained by the production method of the present disclosure is not limited, and may be, for example, powder.

The content of the fluorine-containing compound having a hydrophilic group in polytetrafluoroethylene may be more than 0 ppb by mass and less than 300 ppb by mass based on polytetrafluoroethylene. A preferable upper limit of the content of the fluorine-containing compound having a hydrophilic group in polytetrafluoroethylene is preferably 280 ppb by mass or less, 260 ppb by mass or less, 240 ppb by mass or less, 220 ppb by mass or less, 200 ppb by mass or less, 180 ppb by mass or less, 160 ppb by mass or less, or 140 ppb by mass or less.

The fluorine-containing compound having a hydrophilic group may be the above-described fluorine-containing surfactant used in the polymerization of polytetrafluoroethylene. A typical compound as the fluorine-containing surfactant is a fluorine-containing surfactant having a molecular weight of 1,000 g/mol or less, and preferably 800 g/mol or less.

In one embodiment, polytetrafluoroethylene is substantially free of a compound represented by the following general formula (1) as the fluorine-containing compound having a hydrophilic group:

General formula (1): $[X\text{-}Rf\text{-}A^-]_iM^{i+}$

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; $A^-$ is an acid group; $M^{i+}$ is a cation having a valence of i; and i represents an integer of 1 to 3.

In one embodiment, polytetrafluoroethylene is substantially free of a compound represented by the following general formula (2) as the fluorine-containing compound having a hydrophilic group:

General formula (2): $[C_{n-1}F_{2n-1}COO^-]M^+$

wherein n is an integer of 9 to 14, and $M^+$ represents a cation.

The compound represented by general formula (2) (perfluoroalkanoic acid) is known to be formed during polymerization when perfluoroalkyl vinyl ether or the like is used as a modifying monomer (see International Publication No. WO 2019/161153).

In one embodiment, polytetrafluoroethylene is substantially free of a compound represented by the following general formula (3) as the fluorine-containing compound having a hydrophilic group:

General formula (3): $[R^1\text{-}O\text{-}L\text{-}CO_2^-]M^+$

wherein $R^1$ is a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated, or fully fluorinated alkylene group; and $M^+$ represents a cation.

In one embodiment, polytetrafluoroethylene is substantially free of a compound represented by general formula (4) as the fluorine-containing compound having a hydrophilic group:

General formula (4): $[H\text{-}(CF_2)_mCO_2^-]M^+$

wherein m is an integer of 3 to 19, and $M^+$ represents a cation.

Herein, being substantially free of any of the compounds represented by general formulae (1) to (4) means that the content of any of the compounds represented by general formulae (1) to (4) in polytetrafluoroethylene is 100 ppb by mass or less. The content of any of the compounds represented by general formulae (1) to (4) in the fluoropolymer is preferably 80 ppb by mass or less, more preferably 60 ppb by mass or less, even more preferably 30 ppb by mass or less, yet more preferably 15 ppb by mass or less, and particularly preferably 1 ppb by mass or less, and most preferably the fluorine-containing surfactant is below the detection limit of measurement by liquid chromatography-mass spectrometry (LC/MS).

The content of the fluorine-containing compound having a hydrophilic group in polytetrafluoroethylene can be quantified by a known method. For example, the content can be quantified by LC/MS analysis.

First, methanol is added to polytetrafluoroethylene, extraction is performed, and the resulting extract is subjected to LC/MS analysis. To further increase extraction efficiency, treatment by Soxhlet extraction, ultrasonic treatment, or the like may be performed.

The resulting extract is suitably concentrated by nitrogen purging, and the fluorine-containing compound having a hydrophilic group in the concentrated extract is measured by LC/MS.

From the resulting LC/MS spectrum, molecular weight information is extracted, and a match with the structural formula of a candidate fluorine-containing compound having a hydrophilic group is checked.

Thereafter, aqueous solutions having five or more different content levels of the confirmed fluorine-containing compound having a hydrophilic group are prepared, LC/MS analysis of the aqueous solutions with the respective content levels is carried out, and the relationship between the content level and the area corresponding to that content level is plotted to draw a calibration curve.

Then, using the calibration curve, the area of the LC/MS chromatogram of the fluorine-containing compound having a hydrophilic group in the extract can be converted to the content of the fluorine-containing compound having a hydrophilic group.

Note that the resulting extract can be concentrated by nitrogen purging, thus enabling the lower quantification limit of the measurement method to be lowered.

By forming polytetrafluoroethylene obtained by the production method of the present disclosure, a formed article of polytetrafluoroethylene can be obtained.

Examples of the method for forming polytetrafluoroethylene include compression molding, ram extrusion forming, and isotonic compression molding. In particular, the forming method is preferably compression molding. By compression-forming polytetrafluoroethylene, a compression-formed article of polytetrafluoroethylene can be obtained.
In compression molding, in general, polytetrafluoroethylene is introduced into a metal mold and compressed to produce a preform, and the resulting preform is placed in a furnace to be sintered and then cooled to give a compression-formed article.
Compression molding can be carried out by, for example, introducing polytetrafluoroethylene into a metal mold, compressing polytetrafluoroethylene at 1 to 100 MPa, and heating the resulting compressed preform to 345 to 400°C for sintering.
The formed article of polytetrafluoroethylene may be processed by machining, such as cutting, to produce a formed article having a desired shape. For example, by cutting the formed article of polytetrafluoroethylene, a polytetrafluoroethylene sheet can be obtained. The resulting polytetrafluoroethylene sheet can be used as a lining sheet, a packing, a gasket, or a diaphragm valve. The resulting polytetrafluoroethylene sheet can be used as a heat-resistant electric wire; a heat-resistant insulating tape for vehicle motors/generators and the like; and a release sheet.
The formed article of polytetrafluoroethylene can also be used in sealing materials, casings, sleeves, bellows, hoses, piston rings, butterfly valves, square tanks, wafer carriers, and the like.
Polytetrafluoroethylene obtained by the production method of the present disclosure can also be used as a raw material for granulation or compounding. Polytetrafluoroethylene obtained by the production method of the present disclosure may be granulated by a known granulation method. Also, a filler may be suitably added to polytetrafluoroethylene obtained by the production method of the present disclosure. Moreover, a forming powder containing a filler may be granulated by a known granulation method. The resulting granules and forming material can be formed in the same manner as the method for forming polytetrafluoroethylene.
While embodiments have been described above, it will be understood that various changes in form and detail can be made without departing from the gist and scope of the claims.

<1> According to the first aspect of the present disclosure, provided is

a method for producing non melt-processible polytetrafluoroethylene, the method comprising suspension-polymerizing tetrafluoroethylene in the presence of a polymerization initiator and an aqueous medium in a reactor to prepare a composition containing the aqueous medium and the non melt-processible polytetrafluoroethylene, wherein
after a polymerization terminator is fed to the reactor, or after the tetrafluoroethylene remaining in the reactor is removed from the reactor, a polymerization inhibitor for inhibiting polymerization of residual radicals is fed to the reactor.

<2> According to the second aspect of the present disclosure, provided is
the production method according to the first aspect, wherein the polymerization inhibitor for inhibiting polymerization of residual radicals is at least one selected from the group consisting of alcohols, fatty acid esters, alkanes, halogenated hydrocarbons, cycloalkanes, ketones, mercaptans, sulfur, aromatic hydroxy compounds, aromatic amines, aliphatic amines, quinone compounds, hydroquinone compounds, polyoxy compounds, nitro compounds, nitroso compounds, terpenes, thiocyanates, and cupric chloride ($CuCl_2$).
<3> According to the third aspect of the present disclosure, provided is
the production method according to the first or second aspect, wherein the polymerization inhibitor for inhibiting polymerization of residual radicals is an alcohol having 1 to 5 carbon atoms.
<4> According to the fourth aspect of the present disclosure, provided is
the production method according to any one of the first to third aspects, wherein the polymerization inhibitor for inhibiting polymerization of residual radicals is fed in an amount of 0.001 to 10% by mass based on the aqueous medium.
<5> According to the fifth aspect of the present disclosure, provided is
the production method according to any one of the first to fourth aspects, wherein the composition is brought into contact with the polymerization inhibitor for inhibiting polymerization of residual radicals while stirring the composition.
<6> According to the sixth aspect of the present disclosure, provided is
the production method according to any one of the first to fifth aspects, wherein the composition has a temperature of 30°C or higher when the composition is brought into contact with the polymerization inhibitor for inhibiting polymerization of residual radicals.
<7> According to the seventh aspect of the present disclosure, provided is
the production method according to any one of the first to sixth aspects, wherein the composition is brought into contact with the polymerization inhibitor for inhibiting polymerization of residual radicals for a contact time of 1 minute

or longer.

<8> According to the eighth aspect of the present disclosure, provided is

the production method according to any one of the first to seventh aspects, wherein the tetrafluoroethylene remaining in the reactor is removed from the reactor by discharging from the reactor the tetrafluoroethylene remaining in the reactor or by replacing the tetrafluoroethylene remaining in the reactor with an inert gas.

<9> According to the ninth aspect of the present disclosure, provided is

the production method according to any one of the first to eighth aspects, wherein the tetrafluoroethylene remaining in the reactor is removed from the reactor by reacting an entirety of the tetrafluoroethylene fed to the reactor.

<10> According to the tenth aspect of the present disclosure, provided is

the production method according to any one of the first to ninth aspects, wherein perfluoro(alkyl vinyl ether) in addition to the tetrafluoroethylene is suspension-polymerized.

<11> According to the eleventh aspect of the present disclosure, provided is

the production method according to any one of the first to tenth aspects, wherein after the polymerization inhibitor for inhibiting polymerization of residual radicals is fed to the reactor, the polytetrafluoroethylene is washed.

<12> According to the twelfth aspect of the present disclosure, provided is

the production method according to any one of the first to eleventh aspects, wherein after the polymerization inhibitor for inhibiting polymerization of residual radicals is fed to the reactor, the polytetrafluoroethylene is dried.

<13> According to the thirteenth aspect of the present disclosure, provided is

the production method according to any one of the first to twelfth aspects, wherein after the polymerization inhibitor for inhibiting polymerization of residual radicals is fed to the reactor, the polytetrafluoroethylene is pulverized.

<14> According to the fourteenth aspect of the present disclosure, provided is

the production method according to any one of the first to thirteenth aspects, wherein the polytetrafluoroethylene has a standard specific gravity of 2.130 to 2.280.

<15> According to the fifteenth aspect of the present disclosure, provided is

the production method according to any one of the first to fourteenth aspects, wherein

the tetrafluoroethylene is suspension-polymerized in the presence of a fluorine-containing surfactant in an amount of 100 ppm by mass or less based on the aqueous medium or in the absence thereof,

the polymerization initiator is a persulfate,

perfluoro(alkyl vinyl ether) in addition to the tetrafluoroethylene is suspension-polymerized,

the polytetrafluoroethylene is modified polytetrafluoroethylene,

the perfluoro(alkyl vinyl ether) is added in an amount of 0.001 to 1.0% by mass based on the resulting modified polytetrafluoroethylene,

after the tetrafluoroethylene remaining in the reactor is removed from the reactor by replacing the tetrafluoroethylene remaining in the reactor with an inert gas, an alcohol having 1 to 5 carbon atoms as the polymerization inhibitor for inhibiting polymerization of residual radicals is fed to the reactor in an amount of 0.10 to 1.0% by mass based on the aqueous medium, the composition is brought into contact with the polymerization inhibitor for inhibiting polymerization of residual radicals at 30 to 55°C for 30 minutes or longer while stirring the composition, and

then the polytetrafluoroethylene is washed, and the washed polytetrafluoroethylene is dried to give polytetrafluoroethylene powder.

## EXAMPLES

Next, embodiments of the present disclosure will now be described by way of Examples, but the present disclosure is not limited only to the Examples.

Various numerical values in the Examples were measured by the following methods.

<Apparent density>

Apparent density was measured in accordance with JIS K 6892.

<Standard specific gravity (SSG)>

Standard specific gravity was measured by the water replacement method in accordance with ASTM D792 using a sample molded in accordance with ASTM D4894.

<Average particle size (50% cumulative particle size)>

The average particle size was determined by the following laser diffractometry. A dry method was carried out using a HELOS & RODOS system (trade name, manufactured by SYMPATEC). The measurement sample powder was dispersed by compressed air having a dispersing pressure of 2 bar, the shadow of the measurement sample powder projected by a laser was detected by a measurement sensor unit, accordingly the particle size distribution of the measurement sample powder was calculated, and the value of the volume-based average particle size (50% cumulative particle size) d50 was determined. d50 was regarded as being equal to the particle size corresponding to 50% of the cumulative particle size distribution.

<PPVE content>

The content of perfluoro(propyl vinyl ether) (PPVE) was determined from the infrared absorbance obtained by producing a thin-film disk by press-forming PTFE powder and carrying out FT-IR measurement, in which a ratio (absorbance at 995 $cm^{-1}$/absorbance at 935 $cm^{-1}$) was calculated, and the calculated value was multiplied by 0.14.

<ΔPPVE measurement>

The thin-film PTFE disk prepared above was heated at 220°C for 3 hours. The heated thin-film disk was cooled to room temperature and then subjected to FT-IR again to measure the composition of PPVE. ΔPPVE was determined by subtracting the PPVE content after heating from the PPVE content before heating. The magnitude of ΔPPVE of PTFE is an index of the amount of PPVE that did not sufficiently undergo a copolymerization reaction with TFE and remains in a monomeric or oligomeric form in PTFE. PTFE obtained when nearly all PPVE subjected to polymerization is copolymerized with TFE has a small ΔPPVE. Also, PTFE that was heat-treated at high temperatures or fluorinated PTFE has a ΔPPVE of 0.000% by mass or a value close to 0.000% by mass.

<Measurement of fluorine-containing compound having hydrophilic group>

The content of the fluorine-containing compound having a hydrophilic group contained in the powder was determined as the content of the fluorine-containing compound having a hydrophilic group extracted from the powder.

1. Extraction of fluorine-containing compound having hydrophilic group from powder

First, 10 g (12.6 mL) of methanol was added to 1 g of PTFE powder, and the mixture was subjected to ultrasonic treatment for 120 minutes while being heated at 60°C. After the mixture was left to stand at room temperature, solids were removed, and the extract was obtained.

2. Calibration curve of perfluorocarboxylic acid

Methanol standard solutions of perfluorononanoic acid, perfluorodecanoic acid, perfluoroundecanoic acid, perfluorododecanoic acid, perfluorotridecanoic acid, and perfluorotetradecanoic acid having five known concentration levels were prepared, and measurement was made using a liquid chromatograph-mass spectrometer (Agilent, Ultivo Triple Quadrupole LC-MS). In the respective concentration ranges, first-order approximation was used to create calibration curves from the methanol standard solution concentrations and peak integral values.

Measuring instrument configuration and LC-MS measurement conditions

[Table 1]

| Table 1 Measuring instrument configuration and LC-MS measurement conditions | |
|---|---|
| LC unit | |
| Device | 1290 Infinity II manufactured by Agilent |
| Column | Zorbax RRHD Extend-C18 1.8 μm (2.1×50 mm) manufactured by Agilent |
| Mobile phase | A $CH_3CN$ |
| | B 20 mM $CH_3COONH_4/H_2O$ |

(continued)

| Table 1 Measuring instrument configuration and LC-MS measurement conditions | | |
|---|---|---|
| LC unit | | |
| | 0 → 1 min | A:B=10:90 |
| | 1 → 6 min | A:B=10:90 → A:B=95:5 Linear gradient |
| | 6 → 12 min | A:B=95:5 |
| Flow rate | 0.3 ml/min | |
| Column temperature | 40°C | |
| Sample injection volume | 1 μL | |
| MS unit | | |
| Device | Ultivo LC/TQ manufactured by Agilent | |
| Measurement mode | MRM (Multiple Reaction Monitoring) | |
| Ionization method | Electrospray ionization<br>Negative mode | |

MRM measurement parameters

[Table 2]

Table 2 MRM measurement parameter

| Compound | Number of carbon atoms | Precursor | Product |
|---|---|---|---|
| Perfluorononanoic acid | 9 | 463 | 419 |
| Perfluorodecanoic acid | 10 | 513 | 469 |
| Perfluoroundecanoic acid | 11 | 563 | 519 |
| Perfluorododecanoic acid | 12 | 613 | 569 |
| Perfluorotridecanoic acid | 13 | 663 | 619 |
| Perfluorotetradecanoic acid | 14 | 713 | 669 |

3. Content of compound represented by general formula (2) contained in powder

The content of the compound that was contained in the extract, had n carbon atoms, and represented by general formula (2) was measured from the calibration curve using a liquid chromatograph-mass spectrometer. The content of the compound that was contained in the powder, had n carbon atoms, and represented by general formula (2) was determined using the following relational expression (2):

$$Yn = Xn \times 12.6 \quad (2)$$

Yn: Content (ppb by mass/powder) of compound contained in powder, having n carbon atoms, and represented by general formula (2)
Xn: Content (ng/mL) of compound contained in extract, having n carbon atoms, and represented by general formula (2)

The lower limit of quantifying the content of the compound contained in the powder, having n carbon atoms, and represented by general formula (2) is 1 ppb by mass/powder.

MRM measurement parameters

[Table 3]

**Table 3 MRM measurement parameter**

| Compound | Number of carbon atoms | Precursor | Product |
|---|---|---|---|
| $[C_8F_{17}COO\text{-}]M^+$ | 9 | 463 | 419 |
| $[C_9F_{19}COO\text{-}]M^+$ | 10 | 513 | 469 |
| $[C_{10}F_{21}COO\text{-}]M^+$ | 11 | 563 | 519 |
| $[C_{11}F_{23}COO\text{-}]M^+$ | 12 | 613 | 569 |
| $[C_{12}F_{25}COO\text{-}]M^+$ | 13 | 663 | 619 |
| $[C_{13}F_{27}COO\text{-}]M^+$ | 14 | 713 | 669 |

(Production Example)

A 6 L autoclave equipped with a stainless steel stirring blade and a temperature-controlling jacket was charged with 1.9 L of deionized water and 0.12 g of ammonium carbonate, and hermetically sealed. The mixture was stirred while being heated to 70°C, and the autoclave was purged with nitrogen to have an oxygen concentration inside the autoclave of 10 ppm. The pressure was reduced to remove nitrogen, 3 g of perfluoro(propyl vinyl ether) was introduced using tetrafluoroethylene, and the pressure was increased using tetrafluoroethylene to a pressure of 0.8 MPaG. Polymerization was initiated by adding ammonium persulfate as a polymerization initiator. Polymerization was carried out by continuously adding tetrafluoroethylene so as to maintain a pressure of 0.8 MPaG until 22.5% by mass of tetrafluoroethylene was consumed based on the weight of the aqueous medium, and then the monomer was released without stopping the stirring.

(Example 1)

After releasing the monomer, the autoclave was promptly purged with nitrogen gas to reduce the pressure, an aqueous methanol solution was added, and nitrogen gas was introduced until 0.01 MPaG from the reduced pressure state. Methanol was 0.24% by mass in the aqueous medium. The stirring was continued at 40°C for 3 hours.

The stirring was stopped, the autoclave was opened, the resulting aqueous medium containing suspension-polymerized polytetrafluoroethylene particles was removed, the liquid was drained, and the particles were washed twice with pure water. Simultaneously with washing, the particles were pulverized using a high-speed tumbling mill to give pulverized particles. After drying, PTFE molding powder was obtained. The results of physical property evaluation are shown in Tables 4 and 5.

(Comparative Example 1)

PTFE molding powder was obtained in the same manner as in Example 1 except that after the autoclave was purged with nitrogen gas, only nitrogen gas was introduced until 0.01 MPaG from a reduced pressure state. The results of physical property evaluation are shown in Tables 4 and 5.

[Table 4]

**Table 4**

| | Apparent density [g/ml] | SSG | 50% diameter [μm] | PPVE [mass%] | ΔPPVE [mass%] |
|---|---|---|---|---|---|
| Example 1 | 0.31 | 2.198 | 196 | 0.040 | 0.002 |
| Comparative Example 1 | 0.38 | 2.196 | 153 | 0.040 | 0.001 |

[Table 5]

**Table 5**

| | Content of compound represented by general formula (2) [ppb by mass/PTFE] |
|---|---|
| Example 1 | 31 |
| Comparative Example 1 | 102 |

(Example 2)

PTFE molding powder was obtained in the same manner as in Example 1 except that the amount of methanol contained in the aqueous medium was changed from 0.24% by mass to 0.13% by mass. The results of physical property evaluation are shown in Tables 6 and 7.

(Example 3)

PTFE molding powder was obtained in the same manner as in Example 1 except that isopropanol was used in place of methanol. The results of physical property evaluation are shown in Tables 6 and 7.

[Table 6]

**Table 6**

| | SSG | PPVE [mass%] |
|---|---|---|
| Example 2 | 2.198 | 0.040 |
| Example 3 | 2.202 | 0.040 |

[Table 7]

**Table 7**

| | Content of compound represented by general formula (2) [ppb by mass/PTFE] |
|---|---|
| Example 2 | 43 |
| Example 3 | 18 |

## Claims

1. A method for producing a non melt-processible polytetrafluoroethylene, the method comprising suspension-polymerizing tetrafluoroethylene in the presence of a polymerization initiator and an aqueous medium in a reactor to prepare a composition containing the aqueous medium and the non melt-processible polytetrafluoroethylene, wherein
after a polymerization terminator is fed to the reactor, or after the tetrafluoroethylene remaining in the reactor is removed from the reactor, a polymerization inhibitor for inhibiting polymerization of a residual radical is fed to the reactor.

2. The production method according to claim 1, wherein the polymerization inhibitor for inhibiting polymerization of the residual radical is at least one selected from the group consisting of an alcohol, a fatty acid ester, an alkane, a halogenated hydrocarbon, a cycloalkane, a ketone, a mercaptan, a sulfur, an aromatic hydroxy compound, an aromatic amine, an aliphatic amine, a quinone compound, a hydroquinone compound, a polyoxy compound, a nitro compound, a nitroso compound, a terpene, a thiocyanate, and a cupric chloride ($CuCl_2$).

3. The production method according to claim 1 or 2, wherein the polymerization inhibitor for inhibiting polymerization of

the residual radical is an alcohol having 1 to 5 carbon atoms.

4. The production method according to any one of claims 1 to 3, wherein the polymerization inhibitor for inhibiting polymerization of the residual radical is fed in an amount of 0.001 to 10% by mass based on the aqueous medium.

5. The production method according to any one of claims 1 to 4, wherein the composition is brought into contact with the polymerization inhibitor for inhibiting polymerization of the residual radical while stirring the composition.

6. The production method according to any one of claims 1 to 5, wherein the composition has a temperature of 30°C or higher when the composition is brought into contact with the polymerization inhibitor for inhibiting polymerization of the residual radical.

7. The production method according to any one of claims 1 to 6, wherein the contact time for bringing the composition into contact with the polymerization inhibitor for inhibiting polymerization of the residual radical is 1 minute or longer.

8. The production method according to any one of claims 1 to 7, wherein tetrafluoroethylene remaining in the reactor is removed from the reactor by discharging from the reactor tetrafluoroethylene remaining in the reactor or by replacing tetrafluoroethylene remaining in the reactor with an inert gas.

9. The production method according to any one of claims 1 to 8, wherein tetrafluoroethylene remaining in the reactor is removed from the reactor by reacting an entirety of tetrafluoroethylene fed to the reactor.

10. The production method according to any one of claims 1 to 9, wherein a perfluoro(alkyl vinyl ether) in addition to tetrafluoroethylene is suspension-polymerized.

11. The production method according to any one of claims 1 to 10, wherein after the polymerization inhibitor for inhibiting polymerization of the residual radical is fed to the reactor, the polytetrafluoroethylene is washed.

12. The production method according to any one of claims 1 to 11, wherein after the polymerization inhibitor for inhibiting polymerization of the residual radical is fed to the reactor, the polytetrafluoroethylene is dried.

13. The production method according to any one of claims 1 to 12, wherein after the polymerization inhibitor for inhibiting polymerization of the residual radical is fed to the reactor, the polytetrafluoroethylene is pulverized.

14. The production method according to any one of claims 1 to 13, wherein the polytetrafluoroethylene has a standard specific gravity of 2.130 to 2.280.

15. The production method according to claim 1, wherein tetrafluoroethylene is suspension-polymerized in the presence of a fluorine-containing surfactant in an amount of 100 ppm by mass or less based on the aqueous medium or in the absence thereof,

the polymerization initiator is a persulfate,
a perfluoro(alkyl vinyl ether) in addition to tetrafluoroethylene is suspension-polymerized,
the polytetrafluoroethylene is a modified polytetrafluoroethylene,
the perfluoro(alkyl vinyl ether) is added in an amount of 0.001 to 1.0% by mass based on the resulting modified polytetrafluoroethylene,
after tetrafluoroethylene remaining in the reactor is removed from the reactor by replacing tetrafluoroethylene remaining in the reactor with an inert gas, an alcohol having 1 to 5 carbon atoms as the polymerization inhibitor for inhibiting polymerization of the residual radical is fed to the reactor in an amount of 0.10 to 1.0% by mass based on the aqueous medium, the composition is brought into contact with the polymerization inhibitor for inhibiting polymerization of the residual radical at 30 to 55°C for 30 minutes or longer while stirring the composition, and then the polytetrafluoroethylene is washed, and the washed polytetrafluoroethylene is dried to give a polytetrafluoroethylene powder.

## INTERNATIONAL SEARCH REPORT

International application No.
**PCT/JP2024/035014**

### A. CLASSIFICATION OF SUBJECT MATTER

***C08F 2/42***(2006.01)i; ***C08F 14/26***(2006.01)i; ***C08F 16/24***(2006.01)i
FI: C08F2/42; C08F14/26; C08F16/24

According to International Patent Classification (IPC) or to both national classification and IPC

### B. FIELDS SEARCHED

Minimum documentation searched (classification system followed by classification symbols)

C08F2/42; C08F14/26; C08F16/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2015-45029 A (DAIKIN INDUSTRIES, LTD.) 12 March 2015 (2015-03-12) entire text | 1-15 |
| A | WO 2022/163814 A1 (DAIKIN INDUSTRIES, LTD.) 04 August 2022 (2022-08-04) entire text | 1-15 |
| A | JP 2023-82204 A (DAIKIN INDUSTRIES, LTD.) 13 June 2023 (2023-06-13) entire text | 1-15 |
| A | JP 2019-94498 A (DAIKIN INDUSTRIES, LTD.) 20 June 2019 (2019-06-20) entire text | 1-15 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/035014**

| Patent document cited in search report | Publication date (day/month/year) | Patent family member(s) | Publication date (day/month/year) |
|---|---|---|---|
| JP 2015-45029 A | 12 March 2015 | US 2014/0200310 A1<br>entire text<br>EP 2749576 A1<br>CN 103764684 A | |
| WO 2022/163814 A1 | 04 August 2022 | US 2023/0348636 A1<br>entire text<br>EP 4286425 A1<br>CN 116761828 A | |
| JP 2023-82204 A | 13 June 2023 | EP 4039716 A1<br>entire text<br>CN 114514253 A | |
| JP 2019-94498 A | 20 June 2019 | US 2018/0022846 A1<br>entire text<br>EP 3252086 A1<br>CN 107250179 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S48034399 A
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531
- WO 2013189824 A
- WO 2013189826 A
- WO 2019161153 A